# EUROPÄISCHE PATENTSCHRIFT

(11) **EP 1 301 446 B1**
(45) Veröffentlichungstag und Bekanntmachung des Hinweises auf die Patenterteilung: **04.01.2006**
(21) Anmeldenummer: 01960360.4
(22) Anmeldetag: 22.06.2001
(51) Int. Cl.: C03C 17/34, C03C 17/42, C04B 41/52, C08J 7/04, H01B 1/12, C09D 4/00, C09D 181/02, C09D 181/06

(54) **LEITFÄHIGE, HOCHABRIEBFESTE BESCHICHTUNGEN, EIN VERFAHREN ZU DEREN HERSTELLUNG UND DEREN VEWENDUNG**
CONDUCTIVE COATINGS WHICH ARE HIGHLY RESISTANT TO ABRASION, METHOD FOR THE PRODUCTION AND USE THEREOF
REVETEMENTS CONDUCTEURS TRES RESISTANTS A L'USURE, PROCEDE PERMETTANT DE LES PRODUIRE ET LEUR UTILISATION

(30) Priorität: 05.07.2000 DE 10032631
(43) Veröffentlichungstag der Anmeldung: 16.04.2003
(73) Patentinhaber: Bayer MaterialScience AG, 51368 Leverkusen (DE)
(72) Erfinder: MAGER, Michael, 51375 Leverkusen (DE); WUSSOW, Klaus, 57250 Netphen (DE); GUNTERMANN, Udo, 47800 Krefeld (DE)
(86) Internationale Anmeldenummer: PCT/EP2001/007118
(87) Internationale Veröffentlichungsnummer: WO 2002/002474

(56) Entgegenhaltungen:
- EP-A- 1 010 733
- DE-A- 4 229 192
- DE-A- 19 650 147
- US-A- 5 681 885
- US-A- 5 773 150

## Beschreibung

Die Erfindung betrifft leitfähige, hochabriebfeste Beschichtungen auf Formkörpern, bestehend aus mindestens einer leitfähigen und mindestens einer hochabriebfesten Schicht sowie ein Verfahren zu ihrer Herstellung und deren Verwendung.

Leitfähige Beschichtungen auf Basis von Polyethylendioxythiophen (PEDT) haben bereits ein breites Einsatzgebiet, beispielsweise zur antistatischen Ausrüstung photographischer Filme. Es sind zahlreiche Verfahren beschrieben wie solche leitfähigen Beschichtungen hergestellt werden können. Grundsätzlich wird entweder das PEDT, vermischt mit einem Bindemittel, appliziert oder es wird ein Mehrschichtaufbau gewählt, der den Vorteil hat, dass eine Verträglichkeit (Mischbarkeit) von Bindemittel und PEDT nicht gegeben sein muss.

In der WO 96/05606 sind leitfähige und kratzfeste Mehrschichtaufbauten zur Beschichtung von Bildröhren beschrieben. Es werden auf eine leitfähige PEDT Schicht kratzfeste Schichten appliziert, beispielweise Siliciumdioxid, welches durch Hydrolyse und Kondensation von Tetraethylorthosilikat erhalten wird, wobei die Schichtdicke auf 50 - 250 nm limitiert ist. Alternativ wird die Herstellung kratzfester Schichten aus anorganisch-organischen Hybridmaterialien beschrieben, die in einer Schichtdicke von 10 µm und mehr auf die leitfähige Schicht appliziert werden können. Basis dieser Hybridmaterialien sind Trialkoxysilane der Formel R'-Si(OR)₃, wobei R' für eine polymerisierbare Gruppe steht. Die in der WO 96/05606 beschriebenen Mehrschichtaufbauten haben jedoch mehrere wesentliche Nachteile:
- Durch Auftrag einer der beschriebenen kratzfesten Schichten ist an der Oberfläche des Mehrschichtaufbaus keine nennenswerte Leitfähigkeit mehr messbar.
- Obwohl eine gute Kratzfestigkeit gefunden wird (ermittelt durch Bestimmung der Bleistifthärte) ist die Abriebfestigkeit der Beschichtungen gering.
- Hohe Aushärtetemperaturen, in den Beispielen 160°C.

Antistatische Mehrschichtaufbauten, in welchen auch die oberste (kratzfeste) Schicht eine gewisse Leitfähigkeit aufweisen muss oder Mehrschichtaufbauten mit glasähnlicher Abriebfestigkeit sind somit nicht herstellbar. Darüber hinaus sind Aushärtetemperaturen von 160°C zur Beschichtung der meisten Kunststoffe nicht anwendbar (Erweichung).

Leitfähige Beschichtungen für transparente Substrate, wie z.B. Kunststoffe oder Glas, müssen unter mechanischer Beanspruchung ihre optischen Eigenschaften unbeeinträchtigt beibehalten und somit über eine hohe Abriebfestigkeit verfügen. In der WO 98/25274 sind Mischungen beschrieben, die gut haftende, leitfähige Beschichtungen mit verbesserter Kratzfestigkeit und Transmission des sichtbaren Lichts ergeben. Diese Mischungen bestehen aus einem Bindemittel auf Basis polyfunktioneller Organosil(ox)ane und einem leitfähigen organischen Polymer, die aus der WO 98/25274 und der EP-A 0 947 520 bekannt sind. Die beschriebenen Bindemittel zeichnen sich dadurch aus, dass sie Heterometalle wie Bor oder Aluminium enthalten und über eine besonders gute Abriebfestigkeit verfügen.

In der EP-A 0 947 520 wird beschrieben, dass diese Bindemittel empfindlich auf die Zugabe von Wasser reagieren, so dass z. B. durch die Zugabe von PEDT in der üblichen Lieferform (Baytron®P, ca. 1,3 %ige Dispersion von PEDT und Polystyrolsulfonat in Wasser) die Verarbeitungszeit dieser Mischungen deutlich herabgesetzt wird. Darüber hinaus führt die Zugabe von PEDT zum Bindemittel oft zu einem Verlust an Abriebfestigkeit, der sich auch bei hochabriebfesten Beschichtungen deutlich bemerkbar macht.

Aufgabe der vorliegenden Erfindung war daher die Bereitstellung leitfähiger und hochabriebfest beschichteter Oberflächen, bei deren Herstellung die obengenannten Nachteile vermieden werden.

Überraschend wurde nun gefunden, dass ein Mehrschichtaufbau auf einem Substrat (Formkörper), bestehend aus mindestens einer leitfähigen und mindestens einer hochabriebfesten Schicht, an der Oberfläche eines Formkörpers dennoch eine messbare elektrische Leitfähigkeit aufweist, obwohl die oberste, hochabriebfeste Schicht ein guter elektrischer Isolator ist.

Gegenstand der vorliegenden Erfindung sind daher durch durch einen Mehrschichtaufbau leitfähige und hochabriebfeste Beschichtungen auf einem Substrat, wobei in einer ersten Schicht A) ein elektrisch leitfähiges Polymer und als zweite hochabriebfeste Schicht B) eine Schicht aus polyfunktionellen Organosil(ox)anen aufgebracht ist, dadurch gekennzeichnet, dass
i) die hochabriebfeste Schicht B) aus cyclischen Carbosiloxanen hergestellt wird und
ii) das nach ASTM D 1003 gemessene Streulicht der hochabriebfesten Schicht B) auf der Verkratzungsspur nach Taber-Abraser-Verkratzung gemäß ASTM D 1044 weniger als 20 % beträgt.

Die erfindungsgemäß beschichteten Formkörper zeigen eine messbare elektrische Leitfähigkeit an der Oberfläche, obwohl die hochabriebfeste Schicht ein guter Isolator ist. Die Abriebfestigkeit des erfindungsgemäßen Mehrschichtenaufbaus (nach Taber-Abraser-Test) ist ähnlich der von Glas und die Aushärtung kann vorteilhafter Weise bei Temperaturen von weniger als 160°C erfolgen.

Ein weiterer Gegenstand der vorliegenden Erfindung ist ein Verfahren zur Herstellung leitfähiger und hochabriebfester Beschichtungen, wobei nasschemisch in einem ersten Schritt eine leitfähige Schicht appliziert wird und anschließend in einem zweiten Schritt die Aufbringung einer hochabriebfesten Schicht erfolgt.

Hochabriebfeste Beschichtungen im Sinne der Erfindung sind solche, die nach Taber-Abraser-Verkratzung (bestimmt nach ASTM D 1044, 1000 Cyclen, 500 g Belastung pro Rad, CS-10-F-Steine) Streulicht auf der Verkratzungsspur (bestimmt nach ASTM D 1003) von weniger als 20 %, bevorzugt kleiner 10 %, besonders bevorzugt kleiner 5 % zeigen. Im Vergleich dazu zeigt z.B. handelsübliches Makrolon® bereits nach 100 Cyclen im Taber-Abraser-Test Streulicht von mehr als 30 % auf der Verkratzungsspur. Glas zeigt nach 1000 Cyclen im Taber-Abraser-Test Streulicht von ca. 1-3 %.

Zur Herstellung der zweiten hochabriebfesten Schicht B) werden bevorzugt Sol-Gel-Materialien auf Basis cyclischer Carbosiloxane der Formel (I), 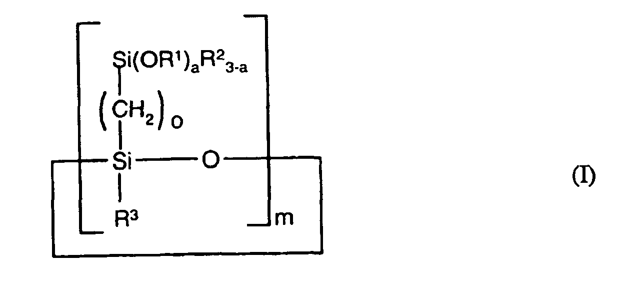
in welcher
m = 3 bis 6, bevorzugt m = 3 oder 4 ist,
o = 2 bis 10, bevorzugt o = 2
sowie
a =1 bis 3,
R¹ = C₁-C₆-Alkyl, C₆-C₁₄-Aryl, bevorzugt R¹ = Methyl, Ethyl, Isopropyl und für den Fall a = 1 kann R¹ auch Wasserstoff bedeuten, weiterhin für
R² = C₁-C₆-Alkyl, C₆-C₁₄-Aryl, bevorzugt R² = Methyl steht sowie
R³ = C₁-C₆-Alkyl, C₆-C₁₄-Aryl,
bevorzugt R³ = Methyl, Ethyl und besonders bevorzugt R³ = Methyl bedeuten,
eingesetzt, die neben ihrer hohen mechanischen Festigkeit auch gute Witterungsstabilität zeigen.

Wie in der WO 98/52992 und in der US-A 6,005,131 beschrieben, werden die cyclischen Carbosiloxane mit Tetraalkoxysilanen, Organotriakoxysilanen und/oder Nanopartikeln cokondensiert, wobei sich, wie in der EP-A 0 947 520 gezeigt, die Gegenwart von Aluminium- oder Boralkoxiden günstig auf die Abriebfestigkeit der aus den Kondensaten hergestellten Beschichtungen auswirkt

Leitfähige Beschichtungen im Sinne der Erfindung zeigen einen Oberflächenwiderstand von 0,1 bis 10¹² Ω/□.

Als leitfähige Schicht werden bevorzugt Zubereitungen von Polythiophenen eingesetzt, wie sie in der DE-OS 42 11 459, EP-A 339 340 und EP-A 440 957 beschrieben sind. Sie enthalten Polythiophensalze vom Typ Polythiophen^{m+} An^{m-}(≙ Polyanion), worin das Polythiophenkation Polythiophen^{m+} positiv geladene Einheiten der Formel (II) enthält, 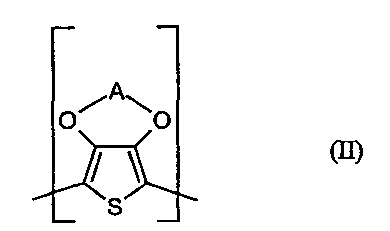
worin
- A: für einen gegebenenfalls mit C₁-C₂₀-Alkyl-, -CH₂-OH oder C₆-C₁₄-Arylgruppen substituierten C₁-C₄-Alkylenrest steht. Die Zahl der Einheiten im Polythiophenkation kann zwischen 5 und 100 betragen.

Beispiele für erfindungsgemäß verwendbare Polyanionen sind die Anionen von polymeren Carbonsäuren wie Polyacrylsäuren, Polymethacrylsäuren, Polymaleinsäuren, außerdem Anionen von polymeren Sulfonsäuren wie Polystyrolsulfonsäuren und Polyvinylsulfonsäuren. Diese Polycarbonsäuren und Polysulfonsäuren können auch Copolymere von Vinylcarbonsäuren und Vinylsulfonsäuren mit anderen polymerisierbaren Monomeren wie Acrylsäureestern und Styrol sein.

Das mittlere Molekulargewicht M_{w} der polymeren Säuren, von denen sich die erfindungsgemäß einsetzbaren Polyanionen ableiten, beträgt 1 000 bis 2 000 000, bevorzugt 2 000 bis 500 000. Die polymeren Säuren oder ihre Alkalisalze sind im Handel erhältlich oder nach bekannten Verfahren herstellbar, wie z.B. in Houben-Weyl: "Methoden der organischen Chemie", Band E20, "Makromolekulare Stoffe", Teil 2, S. 1141 ff. beschrieben sind.

Bei dem erfindungsgemäß hergestellten Mehrschichtaufbau muss dabei zwischen der Leitfähigkeit der PEDT-haltigen Schicht als solcher und der Leitfähigkeit der obersten, hochabriebfesten Beschichtung unterschieden werden. Da diese elektrisch isolierend ist, ist die Leitfähigkeit des gesamten Schichtaufbaus naturgemäß kleiner als die der darunter liegenden PEDT-Schicht(en).

Der einfachste erfindungsgemäß hergestellte Schichtaufbau besteht aus dem Substrat, einer PEDT-haltigen Schicht und einer hochabriebfesten Deckschicht.

In einer Ausführungsform der vorliegenden Erfindung werden leitfähige und abriebfeste Oberflächen auf Formkörpern dadurch erhalten, dass auf das Substrat zunächst eine PEDT-enthaltende Schicht appliziert wird und leichtflüchtige Bestandteile wie Lösemittel gegebenenfalls verdampft werden. Mit oder ohne weitere Aushärtung wird dann die hochabriebfeste Beschichtung aufgebracht und diese schließlich thermisch oder durch Bestrahlung ausgehärtet.

In einer weiteren Ausführungsform der vorliegenden Erfindung wird vor dem Aufbringen der leitfähigen Schicht die Oberfläche des Substrates chemisch mit einem Haftvermittler oder physikalisch (Plasma, Corona) behandelt, um eine verbesserte Haftung zu erzielen. Dies ist insbesondere bei Kunststoffen von Bedeutung, kann aber auch z.B. bei Glas notwendig sein. Es ist allerdings auch möglich, den Haftvermittler der PEDT-haltigen Lösung zuzumischen, womit ein zusätzlicher Beschichtungsschritt vermieden werden kann.

Es ist darüber hinaus möglich, den nasschemisch hergestellten, erfindungsgemäßen Mehrschichtaufbau schließlich noch mit einer aus der Gasphase abgeschiedenen anorganischen Schicht, beispielsweise aus SiO₂, TiO₂ oder Al₂O₃, zu versehen. Dadurch kann die Verschleißfestigkeit weiter erhöht oder die antireflektierende Wirkung verbessert werden.

Die Applikation der leitfähigen und hochabriebfesten Schicht kann nach allen gängigen Techniken erfolgen, wie z.B. Schleudern, Sprühen, Tauchen, Gießen, Rakeln oder Pinseln.

Als Substrate, die mit dem erfindungsgemäßen Mehrschichtaufbau versehen werden können seien Metalle, Keramiken, Holz, Glas und Kunststoffe, wie Polycarbonat, genannt.

Die erfindungsgemäß hergestellten leitfähig und hochabriebfest beschichteten Oberflächen finden Verwendung z.B. als strahlungsarme Bildschirme (elektrischer Widerstand der PEDT-Schicht kleiner 1000 Ω/□) oder als antistatisch und abriebfest ausgerüstete Kunststoffe, z.B. in Form von Folien, extrudierten oder spritzgegossenen Formkörpern. Insbesondere Polycarbonat kann so vor mechanischer Beschädigung und elektrostatischer Aufladung geschützt werden.

### Beispiele

Alle %-Angaben beziehen sich auf das Gewicht und auf die Gesamtmenge aller eingesetzten Komponenten.

Zur Herstellung der leitfähigen Schicht ("CPP 105") wurde eine Mischung bestehend aus 42,92 % Baytron® P, 2,58 % N-Methyl-2-pyrolidon, 0,86 % Silquest® A 187 und 53,64 % Isopropanol verwendet. Baytron® P (Bayer AG, Leverkusen) ist eine ca. 1,3 %ige Dispersion von Polyethylendioxythiophen und Polystyrolsulfonat in Wasser.

### Herstellung der Kratzfestbeschichtung I aus Sol-Gel-Lösung I

Die Herstellung der Kratzfestbeschichtung I erfolgte aus der Sol-Gel-Lösung I bestehend aus 6,8 % *cyclo*-{SiOCH₃[(CH₂)₂Si(CH₃)₂OH]}₄, 32,1 % Tetraethylorthosilicat, 9,6 % Aluminium-2-butylat, 5,1 % Acetessigester, 12,6 % 0,1 N wässriger p-ToluolsuLfonsäurelösung, 32,8 % 1-Methoxy-2-propanol und 1 % Tinuvin® 384; die Herstellung ist in EP-A 0 947 520 beschrieben.

*Cyclo*-{SiOCH₃[(CH₂)₂Si(CH₃)₂0H]}₄ wurde, wie in der US-A 5,880,305 beschrieben, hergestellt.

### Herstellung der Kratzfestbeschichtung II aus Sol-Gel-Lösung II

Die Herstellung der Kratzfestbeschichtung II erfolgte aus der Sol-Gel Lösung II, die wie folgt hergestellt wurde: zunächst wurde eine Mischung von 12,7 % *cyclo-*-{SiOCH₃[(CH₂)₂Si(CH₃)(OEt)₂]}₄-Oligomer, 26,6 % Tetraethylorthosilikat und 33,3 % 1-Methoxy-2-propanol unter Rühren mit 7,0 % 0,1 N wässriger p-Toluolsulfonsäurelösung hydrolysiert; nach 120 min Reaktionszeit wurde dann bei 5°C komlexiertes Aluminiumtributylat zugegeben (hergestellt durch Mischen von 7,9 % Aluminiumtri-sec-butylat in 2,6 % 1-Methoxy-2-propanol mit 4,2 % Acetessigester bei 0°C unter Rühren) und nach weiteren 5 min Rühren noch 4,8 % 0,1 N wässrige p-Toluolsulfonsäurelösung, 0,1 % Tegoglide® 410 und 0,9 % Tinuvin® 384. Nach dem Erwärmen auf Raumtemperatur wurde die Reaktionsmischung schließlich noch 90 min gerührt und war dann verarbeitungsfertig.

*Cyclo*-{SiOCH₃[(CH₂)₂Si(CH₃)(OEt)₂]}₄-Oligomer wurde, wie in der WO 98/52992 beschrieben, hergestellt.

Die Applikation der verschiedenen Schichten erfolgte mittels Schleudern, wobei jeweils immer die maximale Umdrehungszahl (in U/min) und die Haltezeit bei maximaler Drehzahl angegeben sind (in sec).

Die Bestimmung der Bleistifthärte erfolgte nach ASTM 3363, die Verschleißfestigkeit wurde mittels Taber-Abraser-Test (ASTM D 1044; 1000 Cyclen, 500 g pro Rad, CS-10-F-Steine) und anschließender Bestimmung des Streulichts überprüft (ASTM D 1003).

Die Bestimmung des Oberflächenwiderstandes erfolgte mit einem handelsüblichen Messgerät (ITT, Typ MX52S) und Leitsilberstreifen in quadratischer Anordnung (Länge der Steifen = Abstand der Streifen).

### Beispiel 1: Beschichtung von Glas mit Kratzfestbeschichtung I

Auf sechs 7,5 x 7,5 cm große Glasplatten wurde mittels Schleudern zunächst die Mischung CPP 105 appliziert und diese eine Stunde bei 130°C gehärtet. Zur doppelten Beschichtung wurde der Prozess wiederholt. Danach wurde an zwei gegenüberliegenden Seiten über die gesamte Länge ein 2 mm breiter Streifen von Leitsilber aufgetragen und dieser 30 Minuten bei 160°C gehärtet. Nach dem Abkühlen wurde der elektrische Widerstand gemessen.

Ebenfalls durch Schleudern (500 U/min, 20 sec) wurde danach die oben beschriebene Sol-Gel-Mischung I appliziert; die Aushärtung erfolgte bei 130°C eine Stunde. Nach dem Abkühlen wurde sowohl der Oberflächenwiderstand des gesamten Schichtaufbaus bestimmt, als auch der elektrische Widerstand der leitfähigen Schicht als solcher. Die Abriebfestigkeit wurde durch Bestimmung der Bleistifthärte ermittelt.

Die genauen Applikationsbedingungen beim Schleudern, die gemessenen elektrischen Widerstände sowie die Ergebnisse des Bleistifthärte-Tests sind in Tabelle 1 zusammengefasst.

**Tabelle 1:**

| Proben- Nr. | Applikationsbedingungen leitfähige Schicht CPP 105 | Oberflächenwiderstand [kΩ/□] | | Bleistifthärte |
|---|---|---|---|---|
| | | CPP 105 | Kratzfestbeschi-chtung I | |
| 1 | 400 U/min, 20 sec | 2,8 | 133 | > 9 H |
| 2 | 2 x 400 U/min, 20 sec | 1,3 | 270 | 7 H |
| 3 | 600 U/min 20, sec | 3,6 | nicht bestimmt | > 9 H |
| 4 | 2 x 600 U/min, 20 sec | 1,8 | 48 | > 9 H |
| 5 | 1000 U/min 20, sec | 120 | nicht bestimmt | > 9 H |
| 6 | 2 x 1000 U/min, 20 sec | 7,0 | 53 | > 9 H |

### Beispiel 2: Beschichtung von Makrolon® mit Kratzfestbeschichtung I (mit Zwischenhärtung der leitfähigen Schicht)

Zur Verbesserung der Haftung wurde eine 10x10 cm große Makrolon®-Platte zunächst durch Schleudern (2000 U/min, 20 sec) mit 3-Aminopropyltrimethoxysilan beschichtet und eine Stunde bei 80°C thermisch behandelt. Danach wurde die PEDThaltige Mischung CPP 105 aufgetragen (1000 U/min, 20 sec) und anschließend eine Stunde bei 130°C gehärtet. Nach dem Abkühlen auf Raumtemperatur wurde schließlich die Kratzfestbeschichtung I appliziert (500 U/min, 20 sec), die dann eine Stunde bei 80°C und eine Stunde bei 130 °C ausgehärtet wurde.

Die Messung der elektrischen Widerstände ergab 1,4 x 10⁴ Ω/□ für die leitfähige Schicht und 10⁸ Ω/□ auf der Oberfläche der Kratzfestbeschichtung I.

### Beispiel 3: Beschichtung von Makrolon® mit Kratzfestbeschichtung I (ohne Zwischenhärtung der leitfähigen Schicht)

Zur Verbesserung der Haftung wurden sechs 10x10 cm große Makrolon®-Platten zunächst durch Schleudern (2000 U/min, 20 sec) mit 3-Aminopropyltrimethoxysilan beschichtet und eine Stunde bei 80°C thermisch behandelt. Danach wurde die PEDThaltige Mischung CPP 105 aufgetragen und nach 10 min Ablüften bei Raumtemperatur die Kratzfestbeschichtung I appliziert, die dann eine Stunde bei 80°C und eine Stunde bei 130°C ausgehärtet wurde. Die Applikationsbedingungen wurden bei der PEDT-haltigen Schicht und dem Kratzfestlack I variiert und sind in Tabelle 2 zusammengefasst; dort sind ebenfalls die Ergebnisse des Taber-Abraser-Tests nach Bestimmung des Streulichts aufgeführt.

**Tabelle 2:**

| Proben- Nr. | Applikations- bedingungen CPP 105 | Applikations- bedingungen Kratzfestlack I | Streulicht ^{*)} | Oberflächen-widerstand [Ω/□] |
|---|---|---|---|---|
| 7 | 2000 U/min, 20 sec | 400 U/min, 20 sec | 4,8 (0,7) | 8,0 x 10⁸ |
| 8 | 2000 U/min, 20 sec | 500 U/min, 20 sec | 4,8 (0,8) | 6,0 x 10⁸ |
| 9 | 1000 U/min, 20 sec | 400 U/min, 20 sec | 4,7 (0,7) | 2,0 x 10⁹ |
| 10 | 1000 U/min, 20 sec | 500 U/min, 20 sec | 5,3 (0,6) | 1,3 × 10⁹ |
| 11 | 500 U/min, 20 sec | 400 U/min, 20 sec | 4,4 (0,8) | 1,6 x 10⁹ |
| 12 | 500 U/min, 20 sec | 500 U/min, 20 sec | 4,6 (0,7) | 1,0 x 10⁹ |

| | | | | |
|---|---|---|---|---|
| *) Streulicht der Kratzfestbeschichtung nach Taber-Abraser-Test (Ausgangswerte in Klammem) | | | | |

### Beispiel 4: Beschichtung von Glas mit Kratzfestbeschichtung II

Auf vier 10 x 10 cm große Glasplatten wurde mittels Schleudern zunächst die Mischung CPP 105 appliziert und diese eine Stunde bei 130°C gehärtet. Zur doppelten bzw. dreifachen Beschichtung wurde der Prozess wiederholt. Anschließend wurde der Oberflächenwiderstand der so aufgebrachten Beschichtung bestimmt

Danach wurde durch Schleudern (500 U/min, 20 sec) die oben beschriebene Sol-Gel-Mischung II appliziert; die Aushärtung erfolgte bei 130°C eine Stunde. Nach dem Abkühlen wurde die Bleistifthärte sowie die optische Transmission der erhaltenen Mehrschichtaufbauen bestimmt. Die Ergebnisse sind in Tabelle 3 zusammengefasst.

**Tabelle 3:**

| | | | | |
|---|---|---|---|---|
| Proben- Nr. | Applikationsbedingungen leitfähige Schicht CPP 105 Kratzfestschicht II | Oberflächenwi derstand [Ω/□] CPP 105 | Bleistifthärte | Transmission zwischen 400 und 700 nm |
| 1 | 500 U/min, 20 sec | 5100 | > 7 H | > 84 % |
| | 800 U/min, 20 sec | | | |
| 2 | 500 U/min, 20 sec | 5100 | > 7 H | > 86 % |
| | 400 U/min, 20 sec | | | |
| 3 | 2 x 500 U/min 20, sec | 1900 | > 7 H | > 68% |
| | 400 U/min, 20 sec | | | |
| 4 | 3 x 500 U/min 20, sec | 900 | > 7 H | > 51% |
| | 400 U/min, 20 sec | | | |

### Vergleichsbeispiel 1:

Wie in der WO 96/05606 beschrieben wurde eine Mischung aus 10 mol-% Phenyltrimethoxysilan, 65 mol-% 3-Glycidoxypropyltrimethoxysilan, 5 mo1-% 3-Aminopropyltriethoxysilan und 20 mol-% Aluminiumtributylat hergestellt. Dazu wurden 40 g Aluminiumtributylat in 48 g Isopropanol gelöst und mit 21 g Acetessigester umgesetzt. Diese Mischung wurde dann zu einer Mischung aus 16 g Phenyltrimethoxysilan, 120 g 3-Glycidoxypropyltrimethoxysilan und 9 g 3-Aminopropyltriethoxysilan gegeben. Danach wurde mit 100 g Isopropanol und 100 g Diacetonalkohol verdünnt und unter Eiskühlung Wasser zugegeben; nach beendeter Zugabe wurde die Reaktionsmischung schließlich noch 2 h bei Raumtemperatur gerührt. Zur Verbesserung der Haftung wurde eine 10x10 cm große Makrolon®-Platte zunächst durch Schleudern (2000 U/min, 20 sec) mit 3-Aminopropyltrimethoxysilan beschichtet und eine Stunde bei 80°C thermisch behandelt. Ebenfalls durch Schleudern (300 U/min, 20 sec) wurde dann die oben beschriebene Reaktionsmischung appliziert und eine Stunde bei 130°C thermisch behandelt.

Im Taber-Abraser-Test (1000 Cyclen) wurde eine sehr geringe Abriebfestigkeit gefunden; die Verhatzungsspur zeigte Streulicht von mehr als 38 %.

## Patentansprüche

1. Durch einen Mehrschichtaufbau leitfähige und hochabriebfeste Beschichtungen auf einem Substrat, wobei in einer ersten Schicht A) ein elektrisch leitfähiges Polymer und als zweite hochabriebfeste Schicht B) eine Schicht aus polyfunktionellen Organosil(ox)anen aufgebracht ist, **dadurch gekennzeichnet, dass**
i) die hochabriebfeste Schicht B) aus cyclischen Carbosiloxanen hergestellt wird und
ii) das nach ASTM D 1003 gemessene Streulicht der hochabriebfesten Schicht B) auf der Verkratzungsspur nach Taber-Abraser-Verkratzung gemäß ASTM D 1044 weniger als 20 % beträgt.

2. Durch einen Mehrschichtaufbau leitfähige und hochabriebfeste Beschichtungen auf einem Substrat gemäß Anspruch 1, **dadurch gekennzeichnet, dass** die leitfähige Schicht A) Polyethylendioxythiophen (PEDT) enthält.

3. Durch einen Mehrschichtaufbau leitfähige und hochabriebfeste Beschichtungen auf einem Substrat gemäß Anspruch 1, **dadurch gekennzeichnet, dass** das nach ASTM D 1003 gemessene Streulicht auf der Verkratzungsspur nach Taber-Abraser-Verkratzung gemäß ASTM D 1044 weniger als 10 % beträgt.

4. Durch einen Mehrschichtaufbau leitfähige und hochabriebfeste Beschichtungen auf einem Substrat gemäß Anspruch 1, **dadurch gekennzeichnet, dass** das nach ASTM D 1003 gemessene Streulicht auf der Verkratzungsspur nach Taber-Abraser-Verkratzung gemäß ASTM D 1044 weniger als 5 % beträgt.

5. Durch einen Mehrschichtaufbau leitfähige und hochabriebfeste Beschichtungen auf einem Substrat gemäß Anspruch 1, **dadurch gekennzeichnet, dass** der Oberflächenwiderstand der leitfähigen Schicht A) 0,1 - 10¹² Ω/□ beträgt.

6. Verfahren zur Herstellung von durch einen Mehrschichtaufbau leitfähigen und hochabriebfesten Beschichtungen auf einem Substrat gemäß Anspruch 1, bei dem nasschemisch in einem ersten Schritt eine leitfähige Schicht A) appliziert wird und anschließend in einem zweiten Schritt die Aufbringung einer hochabriebfesten Schicht B) erfolgt.

7. Verfahren zur Herstellung von durch einen Mehrschichtaufbau leitfähigen und hochabriebfesten Beschichtungen auf einem Substrat gemäß Anspruch 6, **dadurch gekennzeichnet, dass** im ersten Schritt auf das Substrat eine PEDT-enthaltende Schicht appliziert wird und leichtflüchtige Bestandteile wie Lösemittel gegebenenfalls verdampft werden bevor in einem zweiten Schritt die hochabriebfeste Beschichtung aufgebracht und thermisch oder durch Bestrahlung ausgehärtet wird.

8. Verfahren zur Herstellung von durch einen Mehrschichtaufbau leitfähigen und hochabriebfesten Beschichtungen auf einem Substrat gemäß Anspruch 7, **dadurch gekennzeichnet, dass** die thermische Aushärtung bei Temperaturen von weniger als 160°C erfolgt.

9. Verfahren zur Herstellung von durch einen Mehrschichtaufbau leitfähigen und hochabriebfesten Beschichtungen auf einem Substrat gemäß einem der Ansprüche 6 - 8, **dadurch gekennzeichnet, dass** vor Aufbringen der Schicht A) die Oberfläche des Substrates chemisch oder physikalisch behandelt wird.

10. Verwendung der durch einen Mehrschichtaufbau leitfähigen und hochabriebfesten Beschichtungen auf einem Substrat zur Herstellung strahlungsarmer Bildschirme sowie antistatischer und abriebfest ausgerüsteter Kunststoffe wie Folien oder extrudierten oder spritzgegossenen Formkörpern.

## Claims

1. Conductive and highly abrasion-resistant coatings produced by multilayer buildup on a substrate, where an electrically conductive polymer is applied in a first layer A) and a layer of polyfunctional organosil(ox)anes is applied as second highly abrasion-resistant layer B), **characterized in that**
i) the highly abrasion-resistant layer B) is produced from cyclic carbosiloxanes and
ii) the scattered light from the highly abrasion-resistant layer B) measured in accordance with ASTM D 1003 on the scratch trace after the Taber Abraser test in accordance with ASTM D 1044 is less than 20%.

2. Conductive and highly abrasion-resistant coatings produced by multilayer buildup on a substrate according to Claim 1, **characterized in that** the conductive layer A) contains polyethylenedioxythiophene (PEDT).

3. Conductive and highly abrasion-resistant coatings produced by multilayer buildup on a substrate according to Claim 1, **characterized in that** the scattered light measured in accordance with ASTM D 1003 on the scratch trace after the Taber Abraser test in accordance with ASTM D 1044 is less than 10%.

4. Conductive and highly abrasion-resistant coatings produced by multilayer buildup on a substrate according to Claim 1, **characterized in that** the scattered light measured in accordance with ASTM D 1003 on the scratch trace after the Taber Abraser test in accordance with ASTM D 1044 is less than 5%.

5. Conductive and highly abrasion-resistant coatings produced by multilayer buildup on a substrate according to Claim 1, **characterized in that** the surface resistance of the conductive layer A) is 0.1-10¹² Ω/□.

6. Process for producing conductive and highly abrasion-resistant coatings by multilayer buildup on a substrate according to Claim 1, wherein a conductive layer A) is applied by wet chemical means in a first step and a highly abrasion-resistant layer B) is subsequently applied in a second step.

7. Process for producing conductive and highly abrasion-resistant coatings by multilayer buildup on a substrate according to Claim 6, **characterized in that** a PEDT-containing layer is applied to the substrate in the first step and volatile constituents such as solvents are, if appropriate, vaporized before the highly abrasion-resistant coating is applied and cured thermally or by irradiation in a second step.

8. Process for producing conductive and highly abrasion-resistant coatings by multilayer buildup on a substrate according to Claim 7, **characterized in that** the thermal curing is carried out at temperatures of less than 160°C.

9. Process for producing conductive and highly abrasion-resistant coatings by multilayer buildup on a substrate according to any of Claims 6-8, **characterized in that** the surface of the substrate is treated chemically or physically before application of the layer A).

10. The use of the conductive and highly abrasion-resistant coatings produced by multilayer buildup on a substrate for producing low-radiation VDUs and antistatic and abrasion-resistant plastics such as films or extruded or injection-moulded shaped bodies.

## Revendications

1. Revêtements conducteurs et très résistants à l'usure grâce à une structure multicouche sur un substrat, un polymère électriquement conducteur étant appliqué en une première couche A) et une couche d'organosil(ox)anes polyfonctionnels étant appliquée comme deuxième couche très résistante à l'usure B), **caractérisés en ce que** :
i) la couche très résistante à l'usure B) est réalisée en carbosiloxanes cycliques et
ii) la lumière diffusée mesurée selon ASTM D 1003 de la couche très résistante à l'usure B) sur la marque de rayage après rayage avec l'instrument d'abrasion de Taber selon ASTM D 1044, est inférieure à 20 %.

2. Revêtements conducteurs et très résistants à l'usure grâce à une structure multicouche sur un substrat selon la revendication 1, **caractérisés en ce que** la couche conductrice A) contient du polyéthylènedioxythiophène (PEDT).

3. Revêtements conducteurs et très résistants à l'usure grâce à une structure multicouche sur un substrat selon la revendication 1, **caractérisés en ce que** la lumière diffusée, mesurée selon ASTM D 1003 sur la marque de rayage après rayage avec l'instrument d'abrasion de Taber selon ASTM D 1044, est inférieure à 10 %.

4. Revêtements conducteurs et très résistants à l'usure grâce à une structure multicouche sur un substrat selon la revendication 1, **caractérisés en ce que** la lumière diffusée, mesurée selon ASTM D 1003 sur la marque de rayage après rayage avec l'instrument d'abrasion de Taber selon ASTM D 1044, est inférieure à 5 %.

5. Revêtements conducteurs et très résistants à l'usure grâce à une structure multicouche sur un substrat selon la revendication 1, **caractérisés en ce que** la résistance superficielle de la couche conductrice A) est de 0,1 - 10¹² Ω/□.

6. Procédé pour la production de revêtements conducteurs et très résistants à l'usure grâce à une structure multicouche sur un substrat selon la revendication 1, dans lequel, dans une première étape, une couche conductrice A) est appliquée par voie chimique en milieu humide, l'application d'une couche très résistante à l'usure B) ayant lieu ensuite dans une deuxième étape.

7. Procédé pour la production de revêtements conducteurs et très résistants à l'usure grâce à une structure multicouche sur un substrat selon la revendication 6,**caractérisé en ce que** se trouve appliquée dans une première étape sur le substrat une couche contenant du PEDT et les constituants volatils comme les solvants sont, le cas échéant, vaporisés avant que, dans une deuxième étape, le revêtement très résistant à l'usure soit appliqué et durci par voie thermique ou par irradiation.

8. Procédé pour la production de revêtements conducteurs et très résistants à l'usure grâce à une structure multicouche sur un substrat selon la revendication 7, **caractérisé en ce que** le durcissement thermique est réalisé à des températures inférieures à 160 °C.

9. Procédé pour la production de revêtements conducteurs et très résistants à l'usure grâce à une structure multicouche sur un substrat selon la revendication une des revendications 6 à 8, **caractérisé en ce que** la surface du substrat est soumise, avant l'application de la couche A), à un traitement chimique ou physique.

10. Utilisation des revêtements conducteurs et très résistants à l'usure grâce à une structure multicouche sur un substrat pour la production d'écrans à faible rayonnement ainsi que de matières plastiques rendues anti-statiques et résistantes à l'usure, comme les films ou produits extrudés ou objets moulés par injection.
